# EUROPÄISCHE PATENTSCHRIFT

(11) **EP 1 227 720 B1**
(45) Veröffentlichungstag und Bekanntmachung des Hinweises auf die Patenterteilung: **26.05.2004**
(21) Anmeldenummer: 00979515.4
(22) Anmeldetag: 27.10.2000
(51) Int. Cl.: A01N 25/30, A01N 57/20

(54) **AGROCHEMISCHE EMULSIONEN**
AGROCHEMICAL EMULSIONS
EMULSIONS AGROCHIMIQUES

(30) Priorität: 05.11.1999 DE 19953274
(43) Veröffentlichungstag der Anmeldung: 07.08.2002
(73) Patentinhaber: Cognis Iberia, S.L., 08755 Castellbisbal, (Barcelona) (ES)
(72) Erfinder: SABORIT, Luis, Barcelona (ES)
(74) Vertreter: Fabry, Bernd, Dr.
(86) Internationale Anmeldenummer: PCT/EP2000/010583
(87) Internationale Veröffentlichungsnummer: WO 2001/032019

(56) Entgegenhaltungen:
- EP-A- 0 360 181
- WO-A-00/51427
- WO-A-97/00126
- DE-A- 3 005 380
- US-A- 5 958 439

## Beschreibung

### Gebiet der Erfindung

Die Erfindung befindet sich auf dem Gebiet der Agrochemikalien und betrifft spezielle Emulsionen mit Pestiziden und ausgewählten Emulgatoren.

### Stand der Technik

Zum Schutz der wertvollen Kulturpflanzen vor Schädlingsbefall werden in der Landschaft vielfach Emulsionen öllöslicher Pestizide eingesetzt. Diese Zubereitungen sind jedoch nicht ausreichend lagerstabil und erlauben insbesondere weder die Herstellung von Verdünnungen noch die Zugabe von wasserlöslichen Pestiziden, ohne dass es zu einem Bruch der Emulsion kommt. Ein weiteres Problem besteht darin, dass die Aktivität der Emulsionen nicht immer zufriedenstellend ist.

In diesem Zusammenhang sei auf die Druckschriften **US 5,958,439, WO 97/00126 und EP 0360181 A2** verwiesen, aus denen Pestizidzubereitungen bekannt sind, welche nichtionische Feltsäureamidoamine als Tenside enthalten.

Demzufolge hat die komplexe Aufgabe der vorliegenden Erfindung darin bestanden, neue Pflanzenschutzmittel mit festen wie flüssigen, wasserlöslichen wie auch öllöslichen Pestiziden zur Verfugung zu stellen, die sich gleichzeitig durch eine höhere Lagerstabilität und Aktivität (Adjuvantseffekt) auszeichnen und sich dabei insbesondere sowohl problemlos mit Wasser verdünnen lassen als auch die stabile Einarbeitung zusätzlicher wasserlöslicher Pestizide erlauben.

### Beschreibung der Erfindung

Gegenstand der Erfindung sind Emulsionen, enthaltend
(a) Pestizide und
(b) quaternierte Fettsäureamidoamine.

Überraschenderweise wurde gefunden, dass Emulsionen, die Pestizide zusammen mit stickstoffhaltigen Emulgatoren vom Typ der quaternierten Fettsäuramidoamine sowie gegebenenfalls nichtionischen Co-Emulgatoren enthalten, das komplexe Anforderungsprofil in ausgezeichneter Weise erfüllen. Die Erfindung schließt die Erkenntnis ein, dass besonders vorteilhafte Emulsionen der genannten Zusammensetzung vorliegen, wenn diese nach der Phaseninversionstemperatur-Methode hergestellt worden sind ("PIT-Emulsionen). Die Zubereitungen zeichnen sich durch eine gegenüber konventionellen Emulsionen des Stands der Technik verbesserte Lagerstabilität und höhere Aktivität aus. Sie lassen sich zudem problemlos mit Wasser verdünnen und erlauben ferner auch die nachträgliche Einarbeitung wasserlöslicher Pestizide.

### Pestizide

Bei den Pestiziden, die als Komponente (a) in Frage kommen, handelt es sich vorzugsweise um öllösliche Substanzen. Es können dabei Fungizide, Herbizide, Insektizide oder deren Gemische zum Einsatz gelangen. Typische Beispiele für geeignete **Fungizide** sind Azoxystrobin, Benalaxyl, Carbendazim, Chlorothalonil, Cupfer, Cymoxanil, Cyproconazol, Diphenoconazol, Dinocap, Epoxiconazol, Fluazinam, Flusilazol, Flutriafol, Folpel, Fosetyl-Aluminium, Kresoxim-Methyl, Hexaconazol, Mancozeb, Metalaxyl, Metconazol, Myclobutanil, Ofurace, Phentinhydroxid, Prochloraz, Pyremethanil, Soufre, Tebucanazol, und Tetraconazol sowie deren Gemische. Als **Herbizide** können Alachlor, Acloniphen, Acetochlor, Amidosulfuron, Aminotriazol, Atrazin, Bentazon, Biphenox, Bromoxyl Octanoate, Bromoxynil, Clethodim, Chlodinafop-Propargyl, Chloridazon, Chlorsulfuron, Chlortoluron, Clomazon, Cycloxydim, Desmedipham, Dicamba, Dicyclofop-Methyl, Diharnstoff, Difluphenicanil, Dimithenamid, Ethofumesat, Fluazifop, Fluazifop-p-butyl, Fluorochloridon, Fluroxypyr, Glufosinat, Glyphosat, Haloxyfop-R, Ioxynil Octanoate, Isoproturon, Isoxaben, Metamitron, Metazachlor, Metolachlor, Metsulfuron-Methyl, Nicosulfuron, Notflurazon, Oryzalin, Oxadiazon, Oxyfluotphen, Paraquat, Pendimethalin, Phenmedipham, Phenoxyprop-p-Ethyl, Propaquizafop, Prosulfocarb, Quizalofop, Sulcotrion, Sulphosat, Terbutylazin, Triasulfuron, Trichlorpyr, Triflualin und Triflusulforon-Methyl einzeln oder in Abmischung eingesetzt werden. Als **Insektzide** kommen schließlich Biphenthrin, Carbofuran, Carbosulfan, Chlorpyriphos-Methyl, Chlorpyriphos-Ethyl, β-Cyfluthrin, λ-Cyhalothrin, Cyhexatin, Cypermethrin, Dicofol, Endosulfan, τ-Fluvalinat, α-Methrin, δ-Methrin, Phenbutatin, Pyrimicarb, Terbuphos und Tebuphenpyrad sowie deren Gemische in Betracht. Weitere geeignete Pestizide können beispielsweise dem **Index Phytosanitaire 1998, 34. Aufl.** (Hrsg.: Association de Coordination Technique Agricole, Paris) entnommen werden. Vorzugsweise werden Glufosinate oder Glyphosphate eingesetzt.

### Quaternierte Fettsäureamidoamine

Quaternierte Fettsäureamidoamine, die als Komponente (b) in Frage kommen, werden durch Umsetzung von Amidoaminen mit geeigneten Alkylierungsmitteln, wie beispielsweise Methylchlorid oder insbesondere Dimethylsulfat nach an sich bekannten Verfahren erhalten. Die Quatemierungsprodukte folgen vorzugsweise der Formel **(I),** 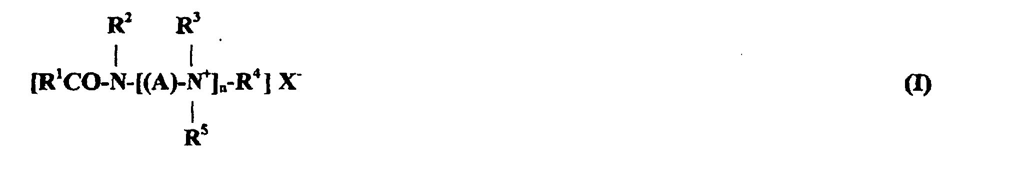 in der R¹CO für einen linearen oder verzweigten, gesättigten oder ungesättigten Acylrest mit 6 bis 22 Kohlenstoffatomen, R² für Wasserstoff oder einen gegebenenfalls hydroxysubstituierten Alkylrest mit 1 bis 4 Kohlenstoffatomen, R³ und R⁴ unabhängig voneinander für Wasserstoff, eine (CH₂CH₂O)ₘH-Gruppe oder einen gegebenenfalls hydroxysubstituierten Alkylrest mit 1 bis 4 Kohlenstoffatomen, R⁵ für einen Alkylrest mit 1 bis 4 Kohlenstoffatomen, A für eine lineare oder verzweigte Alkylengruppe mit 1 bis 6 Kohlenstoffatomen, n für Zahlen von 1 bis 4, m für Zahlen von 1 bis 30 und X für Halogenid, speziell Chlorid, oder Alkylsulfat, vorzugsweise Methylsulfat steht. Typische Beispiele sind quaternierte Kondensationsprodukte von Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen mit Ethylendiamin, Propylendiamin, Diethylentriamin, Dipropylentriamin, Triethylentetramin, Tripropytentetramin sowie deren Addukten mit 1 bis 30, vorzugsweise 5 bis 15 und insbesondere 8 bis 12 Mol Ethylenoxid. Der Einsatz von quatemierten und ethoxylierten Fettsäureamidoaminen ist dabei bevorzugt, weil sich auf diese Weise die Hydrophilie der Emulgatoren exakt auf die zu emulgierenden Wirkstoffe einstellen lässt. Geeignet für diesen Zweck sind beispielsweise die Methylierungsprodukte der bereits oben genannten bevorzugten Fettsäureamidoamine. Es können des weiteren auch Mischungen von Fettsäureamidoaminen und deren Quaternierungsprodukten eingesetzt werden, welche man besonders einfach herstellt, in dem man die Quaternierung nicht vollständig, sondern nur bis zu einem gewünschten Grad durchführt.

### Nichtionische Co-Emulgatoren

In einer bevorzugten Ausführungsform der Erfindung können die Emulsionen neben den stickstoffhaltigen Emulgatoren als fakultative Bestandteile weiterhin nichtionische Co-Emulgatoren (Komponente c) enthalten. Hierfür kommen beispielsweise nichtionogene Tenside aus mindestens einer der folgenden Gruppen in Frage:
(1) Anlagerungsprodukte von 2 bis 120 Mol Ethylenoxid und/ oder 0 bis 75 Mol Propylenoxid an lineare Fettalkohole mit 8 bis 22 C-Atomen, an Fettsäuren mit 8 bis 22 C-Atomen, an Alkylphenole mit 8 bis 15 C-Atomen in der Alkylgruppe und Fettaminen mit 6 bis 22 Kohlenstoffatomen;
(2) C_{12/18}-Fettsäuremono-, -di und -triester von Anlagerungsprodukten von 1 bis 120 Mol Ethylenoxid an Glycerin oder technische Oligoglycerine;
(3) Glycerinmono- und -diester und Sorbitanmono- und -diester von gesättigten und ungesättigten Fettsäuren mit 6 bis 22 Kohlenstoffatomen und deren Ethylenoxidanlagerungsprodukte;
(4) Alkylmono- und -oligoglycoside mit 8 bis 22 Kohlenstoffatomen im Alkylrest und deren ethoxylierte Analoga;
(5) Anlagerungsprodukte von 15 bis 60 Mol Ethylenoxid an Ricinusöl und/oder gehärtetes Ricinusöl;
(6) Polyol- und insbesondere Polyglycerinester wie z.B. Polyglycerinpolyricinoleat oder Polyglyce-rinpoly-12-hydroxystearat. Ebenfalls geeignet sind Gemische von Verbindungen aus mehreren dieser Substanzklassen;
(7) Anlagerungsprodukte von 2 bis 15 Mol Ethylenoxid an Ricinusöl und/oder gehärtetes Ricinusöl;
(8) Partialester auf Basis linearer, verzweigter, ungesättigter bzw gesättigter C_{6/22}-Fettsäuren, Ricinolsäure sowie 12-Hydroxystearinsäure und Glycerin, Polyglycerin, Pentaerythrit, Dipenta-erythrit, Zuckeralkohole (z.B. Sorbit), Alkylglucoside (z.B. Methylglucosid, Butylglucosid, Lauryl-glucosid) sowie Polyglucoside (z.B. Cellulose);
(9) Trialkylphosphate sowie Mono-, Di- und/oder Tri-PEG-alkylphosphate;
(10) Wollwachsalkohole;
(11) Polysiloxan Polyalkyl-Polyether-Copolymere bzw. entsprechende Derivate;
(12) Mischester aus Pentaerythrit, Fettsäuren, Citronensäure und Fettalkohol gemäß **DE-PS 1165574** und/oder Mischester von Fettsäuren mit 6 bis 22 Kohlenstoffatomen, Methylglucose und Polyolen, vorzugsweise Glycerin,
(13) Polyalkylenglycole sowie
(14) Glycerincarbonat.

Die Anlagerungsprodukte von Ethylenoxid und/oder von Propylenoxid an Fettalkohole, Fettsäuren, Alkylphenole, Glycerinmono- und -diester sowie Sorbitanmono- und -diester von Fettsäuren oder an Ricinusöl stellen bekannte, im Handel erhältliche Produkte dar. Es handelt sich dabei um Homologengemische, deren mittlerer Alkoxylierungsgrad dem Verhältnis der Stoffmengen von Ethylenoxid und/ oder Propylenoxid und Substrat, mit denen die Anlagerungsreaktion durchgeführt wird, entspricht. C_{12/18}-Fettsäuremono- und -diester von Anlagerungsprodukten von Ethylenoxid an Glycerin sind aus **DE-PS 2024051 als** Rückfettungsmittel für kosmetische Zubereitungen bekannt. C_{8/18}-Alkylmono- und -oligoglycoside, ihre Herstellung und ihre Verwendung als oberflächenaktive Stoffe sind beispielsweise aus **US 3,839,318, US 3,707,535, US 3,547,828, DE-OS 1943689, DE-OS 2036472** und **DE-A1 3001064** sowie **EP-A1 0077167** bekannt. Ihre Herstellung erfolgt insbesondere durch Umsetzung von Glucose oder Oligosacchariden mit primären Alkoholen mit 8 bis 18 C-Atomen. Bezüglich des Glycosidrestes gilt, dass sowohl Monoglycoside, bei denen ein cyclischer Zuckerrest glycosidisch an den Fettalkohol gebunden ist, als auch oligomere Glycoside mit einem Oligomerisationsgrad bis vorzugsweise etwa 8 geeignet sind. Der Oligomerisierungsgrad ist dabei ein statistischer Mittelwert, dem eine für solche technischen Produkte übliche Homologenverteilung zugrunde liegt.

### Lösemittel

Insbesondere dann, wenn Pestizide in die Emulsionen eingearbeitet werden sollen, die bei Raumtemperatur Feststoffe darstellen, empfiehlt es sich, unpolare Lösemittel mitzuverwenden. Als weitere fakultative Komponente (d) kommen hierfür beispielsweise Mineralöle, Alkylaromaten und Kohlenwasserstoffe, wie sie z.B. unter der Bezeichnung Solvesso® von der Firma Exxon vertrieben werden, Fettsäureniedrigalkylester, wie z.B. die C₁-C₄-, d.h. die Methyl-, Ethyl-, Propyl- und/oder Butylester von Capronsäure, Caprylsäure, 2-Ethylhexansäure, Caprinsäure, Laurinsäure, Isotridecansäure; Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen in Frage. Des weiteren geeignet sind pflanzliche Triglyceride, wie beispielsweise Kokosöl, Palmöl, Palmkernöl, Sonnenblumenöl, Olivenöl und dergleichen.

### Emulsionen

In einer bevorzugten Ausführungsform enthalten die erfindungsgemäßen Emulsionen
(a) 1 bis 60, vorzugsweise 5 bis 55 Gew.-% Pestizide,
(b) 0,5 bis 45, vorzugsweise 5 bis 30 Gew.-% quaternierte Fettsäureamidoamine,
(c) 0 bis 10, vorzugsweise 1 bis 3 Gew.-% nichtionische Co-Emulgatoren und
(c) 0 bis 40, vorzugsweise 5 bis 30 Gew.-% Lösemittel,

mit der Maßgabe, dass sich die Mengenangaben mit Wasser und gegebenenfalls weiteren üblichen Hilfs- und Zusatzstoffen zu 100 Gew.-% ergänzen. Der Wassergehalt der Emulsionen liegt bei durchschnittlich 10 bis 90 und insbesondere 30 bis 60 Gew.-%, die Tröpfchengröße bei 0,01 bis 1, vorzugsweise 0,1 bis 0,5 µm.

Ein weiterer Gegenstand der Erfindung betrifft ein Verfahren zur Herstellung von Pestizidemulsionen, bei dem man die öllöslichen Pestizide zusammen mit den quaternierten Fettsäureamidoaminen (sowie gegebenenfalls den nichtionischen Emulgatoren und den Lösemitteln) und 40 bis 60 Gew.-% - bezogen auf die Endformulierung - Wasser homogenisiert, bis über die Phaseninversionstemperatur erhitzt, die restliche Menge Wasser zusetzt, die Emulsion abkühlen lässt und dann gegebenenfalls mit einer weiteren Menge Wasser auf die Anwendungskonzentration verdünnt und/oder weitere wasserlösliche Pestizide zusetzt.

Ein letzter Gegenstand der Erfindung richtet sich schließlich auf die Verwendung der quaternierten Fettsäureamidoamine als Emulgatoren zur Herstellung von Pestizidformulierungen, in denen sie in Mengen von 0,5 bis 45, vorzugsweise 5 bis 30 Gew.-% - bezogen auf die Mittel - enthalten sein können.

### Beispiele

Es wurden Pflanzenschutzemulsionen unter Einsatz des Pestizids Glufosinat untersucht. Die erfindungsgemäße Emulsion 1 sowie die Vergleichsemulsion V1 wurden nach dem PIT-Verfahren hergestellt, die Vergleichsemulsion V2 nach konventionellem Heißverfahren. Die Emulsionen wurden anschließend 1 Woche bei 20 °C bzw. 4 Wochen bei 40 °C gelagert und auf ihre Stabilität untersucht; dabei bedeutet (++) stabil, (+) leichte Trübung und (-) Phasentrennung. Des weiteren wurden die Emulsionen nach der Herstellung bei 20 °C mit Wasser bis auf einen Aktivsubstanzgehalt von 1 Gew.-% verdünnt und die Stabilität in gleicher Weise beurteilt. Die Ergebnisse sind in Tabelle 1 zusammengefasst.

**Tabelle 1**

| **Stabilität von Pestizidformulierungen** | | | |
|---|---|---|---|
| **Zusammensetzung / Performance** | **1** | **V1** | **V2** |
| Glufosinat | 5,0 | 5,0 | 5,0 |
| Kondensationsprodukt von C_{16/18}-Talgfettsäure mit Ethylendiamin, methyl-quaterniert, Methosulfat-Salz | 1,5 | - | - |
| Kondensationsprodukt von C_{12/14}-Kokosfettsäure mit Diethylentriamin | 1,0 | - | - |
| Ceteareth-20 | - | 2,0 | 2,0 |
| Wasser | ad 100 | | |
| ***Durchschnittliche Teilchengröße [µm]*** | *<* 1 | *<* 1 | 10-100 |

| ***Stabilität*** | | | |
|---|---|---|---|
| *- nach Lagerung (1 Woche, 20°C)* | ++ | ++ | + |
| *- nach Lagerung (4 Wochen, 40°C)* | ++ | + | - |
| *- nach Verdünnung mit Wasser* | ++ | - | - |

## Patentansprüche

1. Emulsionen, enthaltend
(a) Pestizide und
(b) quaternierte Fettsäureamidoamine.

2. Emulsionen nach Anspruch 1, **dadurch gekennzeichnet, dass** sie als Komponente (a) öllösliche und/oder wasserlösliche Pestizide enthalten.

3. Emulsionen nach den Ansprüchen 1 und/oder 2, **dadurch gekennzeichnet, dass** sie als Komponente (a) Fungizide, Herbizide, Insektizide oder deren Gemische enthalten.

4. Emulsionen nach mindestens einem der Ansprüche 1 bis 3, **dadurch gekennzeichnet, dass** sie als Komponente (b) quaternierte Fettsäureamidoamine der Formel **(I)** enthalten, 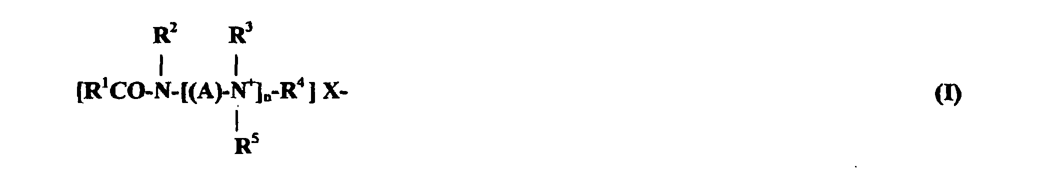 in der R¹CO für einen linearen oder verzweigten, gesättigten oder ungesättigten Acylrest mit 6 bis 22 Kohlenstoffatomen, R² für Wasserstoff oder einen gegebenenfalls hydroxysubstituierten Alkylrest mit 1 bis 4 Kohlenstoffatomen, R³ und R⁴ unabhängig voneinander für Wasserstoff, eine (CH₂CH₂O)ₘH-Gruppe oder einen gegebenenfalls hydroxysubstituierten Alkylrest mit 1 bis 4 Kohlenstoffatomen, R⁵ für einen Alkylrest mit 1 bis 4 Kohlenstoffatomen, A für eine lineare oder verzweigte Alkylengruppe mit 1 bis 6 Kohlenstoffatomen, n für Zahlen von 1 bis 4, m für Zahlen von 1 bis 30 und X für Halogenid oder Alkylsulfat steht.

5. Emulsionen nach mindestens einem der Ansprüche 1 bis 4, **dadurch gekennzeichnet, dass** sie weiterhin als fakultative Komponente (c) nichtionische Co-Emulgatoren enthalten.

6. Emulsionen nach Anspruch 5, **dadurch gekennzeichnet, dass** sie als Komponente (c) nichtionische Emulgatoren enthalten, die ausgewählt sind aus der Gruppe, die gebildet wird von Anlagerungsprodukten von 2 bis 120 Mol Ethylenoxid und/ oder 0 bis 75 Mol Propylenoxid an lineare Fettalkohole mit 8 bis 22 C-Atomen, an Fettsäuren mit 12 bis 22 C 2108 EP C-Atomen und an Alkylphenole mit 8 bis 15 C-Atomen in der Alkylgruppe; C_{12/18}-Fettsäuremono-, -di-, triestern von Anlagerungsprodukten von 1 bis 120 Mol Ethylenoxid an Glycerin; Glycerinmono- und -diestern und Sorbitanmono- und -diester von gesättigten und ungesättigten Fettsäuren mit 6 bis 22 Kohlenstoffatomen und deren Ethylenoxidanlagerungsprodukten; Alkylmono- und -oligoglycosiden mit 8 bis 22 Kohlenstoffatomen im Alkylrest und deren ethoxylierte Analoga; Anlagerungsprodukten von 15 bis 60 Mol Ethylenoxid an Ricinusöl und/oder gehärtetes Ricinusöl; Polyolestern; Anlagerungsprodukten von 2 bis 15 Mol Ethylenoxid an Ricinusöl und/oder gehärtetes Ricinusöl; Partialestern auf Basis linearer, verzweigter, ungesättigter bzw. gesättigter C_{6/22}-Fettsäuren, Ricinolsäure sowie 12-Hydroxystearinsäure und Glycerin, Polyglycerin, Pentaerythrit, Dipentaerythrit, Zuckeralkoholen; Alkylglucosiden; Trialkylphosphaten sowie Mono-, Di- und/oder Tri-PEG-alkylphosphaten; Wollwachsalkoholen; Polysiloxan-Folyalkyl-Polyether-Copolymeren bzw. entsprechenden Derivaten; Mischestern aus Pentaerythrit, Fettsäuren, Citronensäure und Fettalkohol und/oder Mischestern von Fettsäuren mit 6 bis 22 Kohlenstoffatomen, Methylglucose und Polyolen; Polyalkylenglycolen sowie Glycerincarbonat.

7. Emulsionen nach mindestens einem der Ansprüche 1 bis 6, **dadurch gekennzeichnet, dass** sie weiterhin als Komponente (d) Lösemittel enthalten.

8. Emulsionen nach Anspruch 7, **dadurch gekennzeichnet, dass** sie als Komponente (d) Mineralöl, Alkylaromaten, Fettsäureniedrigalkylester und/oder pflanzliche Triglyceride enthalten.

9. Emulsionen nach mindestens einem der Ansprüche 1 bis 8, **dadurch gekennzeichnet, dass** sie
(a) 1 bis 60 Gew.-% Pestizide,
(b) 0,5 bis 40 Gew.-% quaternierte Fettsäureamidoamine,
(c) 0 bis 10 Gew.-% nichtionische Co-Emulgatoren und
(d) 5 bis 40 Gew.-% Lösemittel
mit der Maßgabe enthalten, dass sich die Mengenangaben gegebenenfalls mit Wasser und weiteren üblichen Hilfs- und Zusatzstoffen zu 100 Gew.-% ergänzen.

10. Emulsionen nach mindestens einem der Ansprüche 1 bis 9, **dadurch gekennzeichnet, dass** die durchschnittliche Tröpfchengrößen im Bereich von 0,01 bis 1 µm liegt.

11. Verfahren zur Herstellung von Pestizidemulsionen, bei dem man öllöslichen Pestizide zusammen mit den quaternierten Fettsäureamidoaminen und 40 bis 60 Gew.-% - bezogen auf die Endformulierung - Wasser homogenisiert, bis über die Phaseninversionstemperatur erhitzt, die restliche Menge Wasser zusetzt, die Emulsion abkühlen lässt und dann gegebenenfalls mit einer weiteren Menge Wasser auf die Anwendungskonzentration verdünnt und/oder weitere wasserlösliche Pestizide zusetzt.

12. Verwendung von quaternierten Fettsäureamidoaminen als Emulgatoren für die Herstellung von Pestizidformulierungen.

## Claims

1. Emulsions containing
(a) pesticides and
(b) quaternized fatty acid amidoamines.

2. Emulsions as claimed in claim 1, **characterized in that** they contain oil-soluble and/or water-soluble pesticides as component (a).

3. Emulsions as claimed in claims 1 and/or 2, **characterized in that** they contain fungicides, herbicides, insecticides or mixtures thereof as component (a).

4. Emulsions as claimed in at least one of claims 1 to 3, **characterized in that** they contain as component (b) quaternized fatty acid amidoamines corresponding to formula (I): 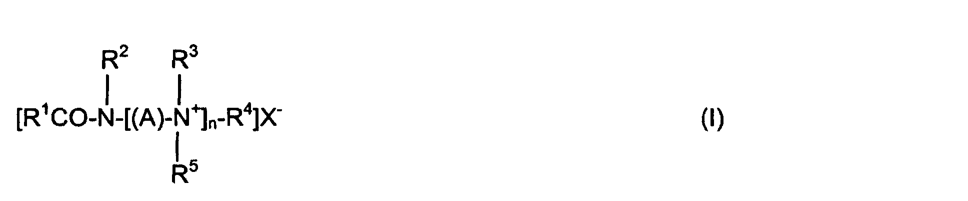 in which R¹CO is a liner or branched, saturated or unsaturated acyl group containing 6 to 22 carbon atoms, R² is hydrogen or an optionally hydroxysubstituted alkyl group containing 1 to 4 carbon atoms, R³ and R⁴ independently of one another represent hydrogen, a (CH₂CH₂O)ₘH group or an optionally hydroxysubstituted alkyl group containing 1 to 4 carbon atoms, R⁵ is an alkyl group containing 1 o 4 carbon atoms, A is a linear or branched alkylene group containing 1 to 6 carbon atoms, n is a number of 1 to 4, m is a number of 1 to 30 and X is halide or alkyl sulfate.

5. Emulsions as claimed in at least one of claims 1 to 4, **characterized in that** they additionally contain nonionic co-emulsifiers as an optional component (c).

6. Emulsions as claimed in claim 5, **characterized in that** they contain as component (c) emulsifiers selected from the group consisting of products of the addition of 2 to 120 mol ethylene oxide and/or 0 to 75 mol propylene oxide onto linear fatty alcohols containing 8 to 22 carbon atoms, onto fatty acids containing 12 to 22 carbon atoms and onto alkylphenols containing 8 to 15 carbon atoms in the alkyl group; C_{12/18} fatty acid monoesters, diesters and triesters of products of the addition of 1 to 120 mol ethylene oxide onto glycerol; glycerol monoesters and diesters and sorbitan monoesters and diesters of saturated and unsaturated fatty acids containing 6 to 22 carbon atoms and ethylene oxide addition products thereof; alkyl mono- and oligoglycosides containing 8 to 22 carbon atoms in the alkyl moiety and ethoxylated analogs thereof; products of the addition of 15 to 60 mol ethylene oxide onto castor oil and/or hydrogenated castor oil; polyol esters; products of the addition of 2 to 15 mol ethylene oxide onto castor oil and/or hydrogenated castor oil; partial esters based on linear, branched, unsaturated or saturated C_{6/22} fatty acids, ricinoleic acid and 12-hydroxystearic acid and glycerol, polyglycerol, pentaerythritol, dipentaerythritol, sugar alcohols; alkyl glucosides; trialkyl phosphates and mono-, di- and/or tri-PEG-alkyl phosphates; wool wax alcohols; polysiloxane/polyalkyl polyether copolymers or corresponding derivatives; mixed esters of pentaerythritol, fatty acids, citric acid and fatty alcohol and/or mixed esters of fatty acids containing 6 to 22 carbon atoms, methyl glucose and polyols; polyalkylene glycols and glycerol carbonate.

7. Emulsions as claimed in at least one of claims 1 to 6, **characterized in that** they additionally contain solvents as component (d).

8. Emulsions as claimed in claim 7, **characterized in that** they contain mineral oil, aromatic alkyl compounds, fatty acid lower alkyl esters and/or vegetable triglycerides as component (d).

9. Emulsions as claimed in at least one of claims 1 to 8, **characterized in that** they contain
(a) 1 to 60% by weight pesticides,
(b) 0.5 to 40% by weight quaternized fatty acid amidoamines,
(c) 0 to 10% by weight nonionic co-emulsifiers and
(d) 5 to 40% by weight solvents,
with the proviso that the quantities shown add up to 100% by weight, optionally with water and other typical auxiliaries and additives.

10. Emulsions as claimed in at least one of claims 1 to 9, **characterized in that** the average droplet size is in the range from 0.01 to 1 µm.

11. A process for the production of pesticide emulsions, **characterized in that** oil-soluble pesticides are homogenized together with the quaternized fatty acid amidoamines and 40 to 60% by weight, based on the final formulation, of water and heated beyond the phase inversion temperature, the remaining water is added, the emulsions are left to cool and then optionally diluted with more water to the in-use concentration and/or more water-soluble pesticides are added.

12. The use of quaternized fatty acid amidoamines as emulsifiers for the production of pesticide formulations.

## Revendications

1. Emulsions contenant
a) des pesticides
b) des amidoamines d'acide gras quaternisées.

2. Emulsions selon la revendication 1,
**caractérisées en ce qu'**
elles contiennent comme composant a) des pesticides solubles dans l'huile et/ou solubles dans l'eau.

3. Emulsions selon les revendications 1 et/ou 2,
**caractérisées en ce qu'**
elles contiennent comme composant a) des fongicides, des herbicides, des insecticides ou leurs mélanges.

4. Emulsions selon au moins l'une des revendications 1 à 3,
**caractérisées en ce qu'**
elles contiennent comme composant b) des amidoamines d'acide gras quaternisées de formule (I) 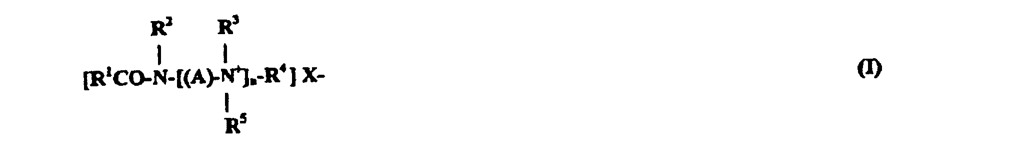 dans laquelle R¹CO représente un reste acyle linéaire ou ramifié, saturé ou non saturé ayant de 6 à 22 atomes de carbone, R² représente de l'hydrogène ou un reste alkyle substitué éventuellement par un hydroxy ayant de 1 à 4 atomes de carbone, R³ et R⁴ indépendamment l'un de l'autre représentent de l'hydrogène, un groupe (CH₂CH₂O)ₘH ou un reste alkyle substitué éventuellement par un hydroxy, ayant de 1 à 4 atomes de carbone, R⁵ représente un reste alkyle ayant de 1 à 4 atomes de carbone, A représente un groupe alkylène linéaire ou ramifié ayant de 1 à 6 atomes de carbone, n représente des nombres allant de 1 à 4, m des nombres allant de 1 à 30 et X représente un halogénure ou un alkylsulfate.

5. Emulsions selon au moins l'une des revendications 1 à 4,
**caractérisées en ce qu'**
elles contiennent en outre en tant que composant facultatif c) des co-émulsionnants non ioniques.

6. Emulsions selon la revendication 5,
**caractérisées en ce qu'**
elles contiennent en outre en tant que composant c) des agents émulsionnants non ioniques qui sont choisis dans le groupe qui est formé des produits d'addition de 2 à 120 mol. d'oxyde d'éthylène et/ou de 0 à 75 mol. d'oxyde de propylène sur des alcools gras linéaires ayant de 8 à 22 atomes de carbone, sur des acides gras ayant de 12 à 22 atomes de carbone, et sur des alkylphénols ayant de 8 à 15 atomes de carbone dans le groupe alkyle ; des mono-, di- et tri-esters d'acides gras en C₁₂/C₁₈- de produits d'addition de 1 à 120 mol. d'oxyde d'éthylène sur le glycérol ; les mono- et di-esters de glycérol et les mono- et di-esters de sorbitane d'acides gras saturés ou non saturés, ayant de 6 à 22 atomes de carbone, et leurs produits d'addition d'oxyde d'éthylène ; des alkyl mono- et oligoglycosides ayant de 8 à 22 atomes de carbone dans le reste alkyle et leurs analogues éthoxylés ; des produits d'addition de 15 à 60 mol. d'oxyde d'éthylène sur l'huile de ricin et/ou l'huile de ricin durcie ; des esters de polyol ; des produits d'addition de 2 à 15 mol. d'oxyde d'éthylène sur l'huile de ricin et/ou de l'huile de ricin durcie ; des esters partiels à base d'acides gras linéaires, ramifiés, non saturés ou saturés en C₆/C₂₂, des acides ricinoléiques ainsi que des acides 12-hydroxystéarique, et de glycérol, de polyglycérol, de pentaérythritol, de dipentaérythritol, d'alcools de sucre ; des alkylglucosides ; des phosphates de trialkyle, ainsi que des mono-, di- et/ou tri PEG alkylphosphates, des alcools de cire de laine, des copolymères polysiloxane, polyalkyl, polyéther ou les dérivés correspondants ; des éthers mixtes à base de pentaérythritol, d'acides gras, d'acide citrique et d'alcool gras et/ou d'esters mixtes d'acides gras ayant de 6 à 22 atomes de carbone, du méthylglucose et de polyols ; des polyalkylèneglycols ainsi que du carbonate de glycérol.

7. Emulsions selon au moins l'une des revendications 1 à 6,
**caractérisées en ce qu'**
elles contiennent en outre comme composant d) un solvant.

8. Emulsions selon la revendication 7,
**caractérisées en ce qu'**
elles contiennent comme composant d) une huile minérale, des alkylaromatiques, des esters d'alkyle inférieur d'acide gras et/ou des triglycérides végétaux.

9. Emulsions selon au moins l'une des revendications 1 à 8,
**caractérisées en ce qu'**
elles contiennent
a) de 1 à 60 % en poids de pesticide,
b) de 0,5 à 40 % en poids d'amidoamine d'acide gras quaternisé,
c) de 0 à 10 % en poids de co-émulsionnant non ionique et
d) de 5 à 40 % en poids de solvant
avec la précision que les données en quantités se complètent le cas échéant avec de l'eau et d'autres adjuvants et additifs usuels, à 100 % en poids.

10. Emulsions selon au moins l'une des revendicationsl à 9,
**caractérisées en ce que**
la taille moyenne des gouttelettes se situe dans la zone de 0,01 à 1 µm.

11. Procédé d'obtention d'émulsions de pesticides, selon lequel on homogénéise des pesticides solubles dans l'huile conjointement avec les amidoamines d'acide gras quaternisées et de 40 à 60 % en poids - rapporté à la formation finale - d'eau, on chauffe jusqu'au-dessus de la température et inversion de phase, on ajoute la quantité d'eau résiduelle, on laisse refroidir l'émulsion et ensuite on dilue le cas échéant avec une quantité supplémentaire d'eau à la concentration d'utilisation et/ou on additionne d'autres pesticides solubles dans l'eau.

12. Utilisation d'amidoamines d'acide gras quaternisés, comme agents émulsionnants pour la production de formulations de pesticides.
